# EUROPEAN PATENT SPECIFICATION

(11) **EP 3 439 451 B1**
(45) Date of publication and mention of the grant of the patent: **29.09.2021**
(21) Application number: 17779647.1
(22) Date of filing: 04.04.2017
(51) Int. Cl.: A01B 76/00, A01B 79/00, A01G 9/24, G06F 3/033, G06Q 10/10, H04L 29/06, H04L 29/08, A01G 22/00, G06Q 10/06, G06Q 50/02

(54) **MODULAR FARM CONTROL AND MONITORING SYSTEM**
MODULARES LANDWIRTSCHAFTLICHES STEUERUNGS- UND ÜBERWACHUNGSSYSTEM
SYSTÈME DE SURVEILLANCE ET DE COMMANDE DE FERME MODULAIRE

(30) Priority: 04.04.2016 US 201662317895 P
(43) Date of publication of application: 13.02.2019
(73) Proprietor: Freight Farms, Inc., Boston, MA 02127 (US)
(72) Inventor: SEAMAN, Kyle, Bedford MA 01730 (US); MCNAMARA, Brad, Boston MA 02727 (US); FRIEDMAN, Jon, Boston MA 02127 (US)
(74) Representative: Cabinet Beau de Loménie
(86) International application number: PCT/US2017/025916
(87) International publication number: WO 2017/176733

(56) References cited:
- MX-A- 2012 013 571
- US-A1- 2014 288 850
- US-A1- 2015 305 258
- US-A1- 2015 305 258
- US-A1- 2015 325 100
- US-A1- 2015 372 832
- US-A1- 2016 050 862
- US-A1- 2016 050 862
- US-B1- 6 591 145

## Description

### CROSS REFERENCE TO RELATED APPLICATIONS

This application claims priority under 35 § 119(e) of U.S. Provisional Application No. 62/317,895 filed on April 4, 2016, entitled "Modular Farm Control and Monitoring System,".

### BACKGROUND

The need for fresh food is growing as the population increases and changes in the climate impact growing seasons. The current food supply model, based on traditional farming methods and long distance shipping, is economically and environmentally unsustainable. Traditional farming operations are usually located in agricultural areas, which require large upfront costs and large acreage and have high operational costs from seed to sale.

Urban and local agriculture also faces obstacles. Growing space in urban areas is limited and not sufficient to meet a high demand. High start-up and operating costs of greenhouses make local crop production difficult for many businesses. Structures intended to support rooftop greenhouses must be evaluated by structural engineers and often require additional bracing to support the weight. Urban gardens often must address contaminated soil. Hydroponics systems are not easily used in urban locales, as most hydroponic systems are meant to be installed in agricultural settings, are not easily transportable, and require extensive training of personnel for operation.

Contained agricultural systems have recently been developed to address these issues. For example, a growing system in a modular container, described in US Patent No. 9,288,948, has been developed for generating high-yield crops. Within the modular container, the growing system includes a germination station for nurturing seeds until they germinate into plants, a plurality of vertical racks to hold the growing plants, a lighting system to provide appropriate light for the plants, an irrigation system to provide nutrients to the plants, a climate control system to control the environmental conditions within the container, and a ventilation system for providing airflow to the plants.

Document US 2016/050862 describes a control system for a hydroponic greenhouse growing environment. Document US 6 591 145 describes systems and methods for autonomously controlling agricultural machinery. Document US 2015/305258 describes methods and apparatus for a hybrid distributed hydroculture system. Document US 2015/372832 describes methods and apparatus for exploiting interfaces

### SUMMARY OF THE INVENTION

Control and monitoring systems and methods for a network of modular farms are provided, according to the appended independent claims. Further embodiments are provided in the dependent claims. Data generated by an individual farm can be aggregated with data from other farms. Farms can be controlled based on information learned from multiple farms in a network.

### DESCRIPTION OF THE DRAWINGS

The invention will be more fully understood from the following detailed description taken in conjunction with the accompanying drawings in which:
Fig. 1 is a schematic diagram of an embodiment of a system architecture for the control and monitoring of a network of modular farms;
Fig. 2 is a schematic diagram of an embodiment of one farm in communication with a farm networking service;
Fig. 3 is a schematic diagram of an embodiment of a farm control system;
Fig. 4 is a schematic diagram of an embodiment of a contained environment of a
Fig. 5 is a schematic diagram of an embodiment of a farm networking service;
Fig. 6 is a schematic flow chart of an embodiment of a farm operation monitoring process;
Fig. 7 is a schematic block diagram of embodiments of modules used in a farm networking service;
Fig. 8 is an embodiment of a data structure for settings;
Fig. 9 is an embodiment of a data structure for equipment;
Fig. 10 is a schematic diagram of an embodiment of a publish-subscribe architecture used in a farm networking service;
Fig. 11 is a further schematic diagram of an embodiment of a publish-subscribe architecture used in a farm networking service;
Fig. 12 is a schematic diagram of a further communication architecture used in a farm networking service;
Fig. 13 is a schematic illustration of a machine learning algorithm;
Fig. 14 is an illustration of a user interface for tracking farm operations on a mobile device;
Fig. 15 is an illustration of an embodiment of a user interface for monitoring farm operations on a user device;
Fig. 16 is an illustration of an embodiment of user interfaces for monitoring farm operations on a user mobile device;
Fig. 17 is an illustration of an embodiment of a user interface for controlling farm operations on a user device;
Fig. 18 is an illustration of an embodiment of user interfaces for controlling farm operations on a user mobile device;
Fig. 19 is an illustration of an embodiment of a user interface for monitoring alerts regarding farm operations on a user device;
Fig. 20 is an illustration of an embodiment of user interface for monitoring alerts regarding farm operations on a user mobile device;
Fig. 21 is an illustration of an embodiment of a user interface for viewing historical data regarding farm operations on a user device;
Fig. 22 is an illustration of an embodiment of user interfaces for viewing historical data regarding farm operations on a user mobile device;
Fig. 23 is an illustration of an embodiment of a user interface for tracking and nations on a user device;
Fig. 24 is an illustration of an embodiment of a user interface for tracking and performing user operations on a user mobile device; and
Fig. 25 is an embodiment of a data structure for parameters.

### DETAILED DESCRIPTION OF THE INVENTION

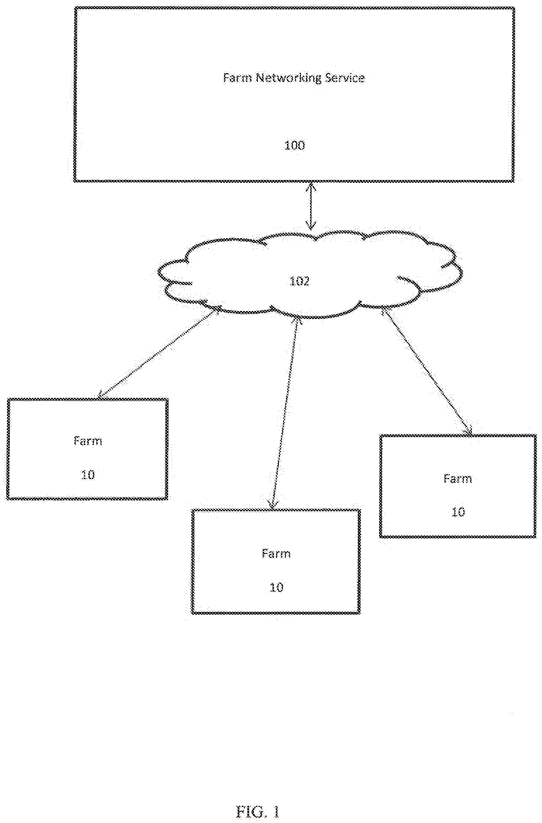

Fig. 1 is a schematic illustration of a farm network including an embodiment of a farm networking service 100 in communication, via a communication network 102, with a number of modular farms 10. The farm networking service can provide monitoring and control of farm operations for each of the farms that are part of the network. The farm networking service can monitor various parameters and, based on the obtained data, can provide automatic control of farm operations and/or can provide notifications to one or more users associated with each farm. User control of farm operations can be enabled remotely from a user device. A user can upload data associated with a farm and farm operations to the farm networking service. The farm networking service can learn from the monitored and uploaded data to adjust parameters of farm operations. The farm networking service can aggregate data from multiple farms in the network to enable learning of best practices, crop recipes, and other information for all of the farms in the network. The farm networking service can enable an automated farm marketplace for the buying and selling of crops based on aggregated data.

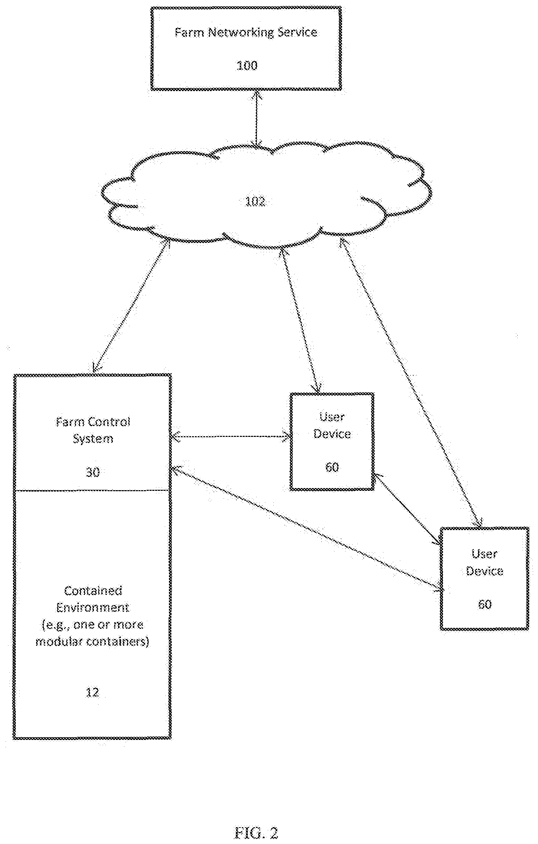

Fig. 2 is a schematic illustration of a single modular farm 10 in communication with the farm networking service 100 via a communication network 102 such as the Internet. In some embodiments, the modular farm includes one or more modular containers that form a contained environment 12 for a growing system in which one or more crops can be grown under controlled conditions to achieve high crop yields. A farm control system 30 is provided to monitor and control the various components of the growing system within the contained environment, described further below. The farm control system can be located within the contained environment 12, such as within one or more of the modular containers, or can be located outside of the contained environment, such as within a control room attached to or near to the contained environment. The farm control system can be distributed across multiple containers that together form the contained environment of a farm. One or more user devices 60 in communication with the farm control system can be provided to enable a user, for example, a farmer, to monitor and control farm operations.

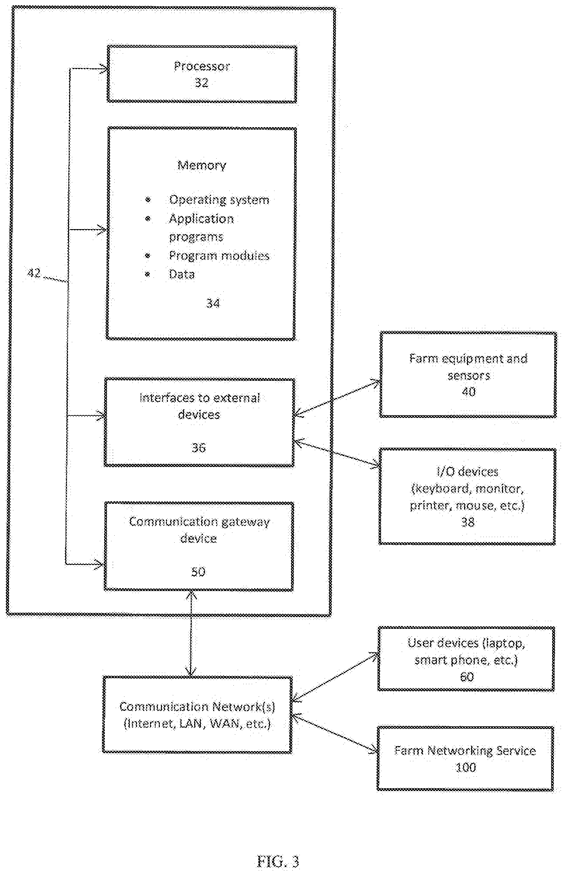

Referring to Fig. 3, in some embodiments, the farm control system can include one or more processors 32 for carrying out operations, such as application program instructions, and age of application programs and program modules, data, and other typical items, such as a BIOS. The farm control system can include interfaces 36 to input/output devices 38, such as a keyboard, monitor, printer, mouse, and the like, and to external devices, such as the farm equipment and sensors 40, described further below. A system or other bus 42 can be provided to enable communication between elements within the farm control system.

The farm control system includes a communication gateway device 50 to enable communication with the one or more user devices 60 associated with the farm 10. The user devices 60 can be located remotely from the farm control system 30 and/or the contained environment 12. Such user devices can include, without limitation, a personal computer, laptop computer, tablet computer, mobile device, smart phone, smart watch, wearable device, and the like. The communication gateway device 50 can also enable communication with the farm networking service 100. The communication gateway device can provide communication over any suitable network or combination of networks, such as, without limitation, an intranet, a local area network, a wide area network, or the Internet. Communication can be wired or wireless or a combination thereof. The user devices can also be enabled to communicate with other user devices associated with the farm and with the farm networking service, described further below.

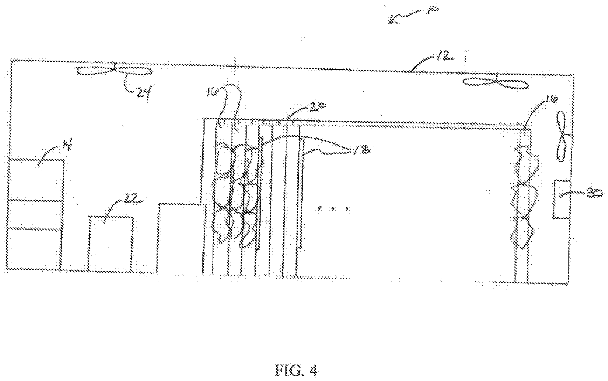

One example of a modular farm 10 is illustrated schematically in Fig. 4. Within a container 12, a growing system can include elements such as a germination station 14 for nurturing seeds until they germinate into plants, a plurality of vertical racks 16 to hold the growing plants in the contained environment, a lighting system 18 to provide appropriate light for the plants, an irrigation system 20 to provide nutrients to the plants, a climate control system 22 to control the environmental conditions within the contained environment, and a ventilation system 24 for providing airflow to the plants. The farm control system 30 is provided within the container for monitoring and controlling the components of the growing system. One exemplary growing system in a modular container is described in US Patent No. 9,288,948.

At each modular farm, the farm control system controls and monitors various components of the growing system. The components can include equipment such as a nutrient solution reservoir, pumps, valves, tubing, aerators, and water filters to provide irrigation; a nutrient doser to introduce various nutrients, such as phosphates, nitrates, and trace minerals from nutrient supply reservoirs, into water in the nutrient solution reservoir; fans, vents, and air filters for ventilation; lights, such as LED lights; motors for moving lights VAC equipment for heating and cooling; still and video cameras for providing visual monitoring of the plants within the contained environment; and electrical generators, batteries, solar panels, fuel tanks, and the like for power. Components can also include various sensors to monitor conditions inside the contained environment, such as temperature sensors, humidity sensors, and CO₂ sensors, and sensors to detect the pH, acidity, conductivity, oxygen content, and temperature of the nutrient solution.

The farm control system 30 can monitor and control the components based on specifications set by a user or on preset specifications for a particular crop. For example, the control system can monitor a climate control system and can change humidity, CO₂ level, temperature, and other parameters in order to remain within specified values. The control system can be coupled to switches of a lighting system to control the lighting based on factors such as time of day and an on/off duty cycle. The control system can be coupled to sensors and valving of an irrigation system to ensure that the proper nutrient concentration for a specific crop is being maintained in the nutrient reservoir. For example, the type and amount of nutrients added into a nutrient reservoir to maintain specific nutrient levels can be controlled, depending on the type of plant being grown. The pH and acidity level of the nutrient solution can be controlled. The control system can monitor and control the amount of nutrient solution being dripped onto specific grow channels or specific sections of grow channels. The control system can be coupled to motors and switches of a ventilation system to ensure the proper airflow is being maintained for various sections of plants. The control system can be in communication with one or more cameras to capture visual records of plant growth. The above are illustrative examples of components that can be monitored and controlled in order to ensure maintenance of optimal growing conditions; other components can be monitored and controlled, as will be understood by those of skill in the art.

The values for the variable parameters can be selected based on the crop desired and the optimal environmental and feeding conditions for that crop. The user can set and modify levels, modify and/or override any pre-set levels, or merely monitor activity in the contained environment. The farm control system can be configured to issue alerts of equipment failures, maintenance schedules, changes in conditions, or other variations from the prescribed levels. The user can perform any or all of these actions from a user device in communication with the farm control system and/or via input/output devices in direct communication with the farm control system.

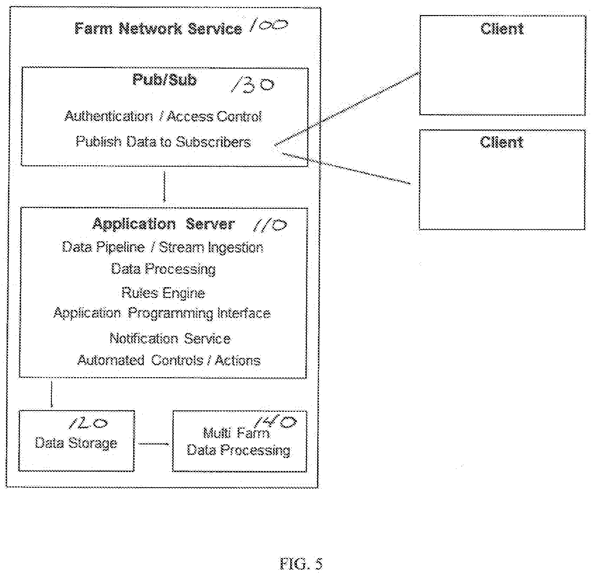

Referring to Fig. 5, in some embodiments, a farm networking service 100 can include an application server 110 and data storage 120. At the application server, one or more s and one or more application programming interface modules can be provided. The farm networking service can include a publication subscription module 130, for example, to manage access control, authenticate a connection request from a farm that is a member of the network or to authorize a user of a member farm seeking to connect to the service, and to publish data to subscribers. The farm networking service can include a multi-farm data processing module 140 to manage data from all of the farms belonging to the network. It will be appreciated that the farm networking service can include other servers, programs modules, and the like.

The farm networking service can be in communication with each farm control system located at the farms that are part of the network. The farm networking service can obtain data directly from the farm control system, including data such as, without limitation, climate data, equipment and operational data, and crop yield data. Climate data can include, without limitation, parameters within the contained environment such as humidity, CO₂ levels, temperature, light levels, air flow across the crops, water and nutrient levels supplied to the crops, and parameters of the nutrient solution such as pH, conductivity, oxygen content, and temperature. Equipment data can include, without limitation, duty cycles, nutrient solution reservoir level, nutrient supply reservoir levels, fuel tank levels, and equipment failures and maintenance actions. Operational data can include, without limitation, amounts of resources consumed over a time period, such as the volume of water and fuel or pounds of nutrients. Yield data can include, without limitation, the amount of a particular crop harvested over a time period. The amount can be measured in any suitable units, such as pounds, number of heads, and the like. For example, farm yield data can include, for example, the number of heads of lettuce produced annually or the number of pounds of basil produced annually. The time period can be any suitable time period, such as days, weeks, months, or annually.

In some embodiments, the farm networking service can obtain the data from a farm control system on a periodic schedule, such as, without limitation, at 1-minute intervals, 5-minute intervals, 10-minute intervals, 30-minute intervals, 1-hour intervals, 6-hour intervals, 12-hour intervals, or 24-hour intervals. Data can be obtained at other time intervals if desired. Different types of data can be obtained at different time intervals. The data is stored in the data storage, which is preferably optimized for time series data, since many of the parameters vary over time.

In some embodiments, a user can upload to the farm networking service data that is obtained by the user or generated at the user's farm. Such data can include, without limitation, pricing data, operations data, location data, purchases, and support. Pricing data e the user obtained for the sale of a particular crop on a particular date in a particular local or regional market. Operations data can include data related to the climate, equipment, and crop yield at a farm. Location data can include a particular farm location, for example, if a farm includes containers located at multiple locations. Purchases can include any items purchased by the user from an on-line store or other store, the amounts, and the price paid. Purchased items can include, without limitation, seeds, growth media, nutrients, lights, equipment, and equipment parts for repair. Support can include any support services obtained by the user, such as consultation with a farm expert or a repair service for a piece of equipment.

In some embodiments, the farm networking service can include one or more applications that analyze the data received from an individual farm and send communications to the farm based on the analyzed data. Communications can include notifications sent to users at the user devices. Communications can include control instructions sent to the farm control system to carry out adjustment of parameters.

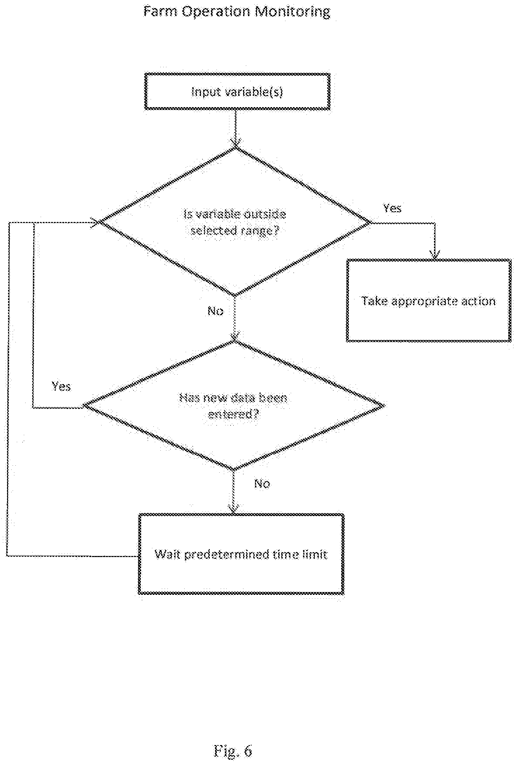

In some embodiments, the farm networking service can be operative to monitor various farm operations using selected filters. More particularly, for a particular operation, a module can be provided to monitor one or more variables and compare the variables to preset values. The module can determine if a variable exceeds a preset maximum, falls below a preset minimum, or otherwise falls outside a preset range, thereby triggering an action. Actions can include a notification sent to a user, or the transmission of a control signal to a piece of equipment at the farm. For example, a water pump can be monitored and turned off remotely if it runs longer than a determined time limit. A user notification can be a prediction of a cause or a likely outcome from a given input, following which a user can directly check the farm operation at issue. For example, a CO₂ level that has not risen while a generator has been continually running may be an indication that a propane tank is empty. A notification can be sent to the user to check the tank; upon checking the tank, a user can determine if the tank is actually empty and can replace or refill the tank. The modules can be programmed to run whenever new data is saved to the farm service or on a determined schedule. Fig. 6 illustrates an exemplary flow chart of a monitoring operation.

As another example, to maintain conditions or provide alerts, an application module can include algorithms relating to environmental conditions prescribed by the user. In one embodiment, an application module can utilize a series of if-then relationships to maintain optimal conditions. For example, if the humidity within the contained environment falls below a set limit, for example, 60%, then the farm networking service can send a alert the user and/or to the farm control system to activate a humidifier until the humidity level stabilizes at the desired level. In another example, if the temperature within the contained environment rises above a set limit, for example, 85 °F, or falls below a set limit, for example, 66 °F, then the farm networking service can send a communication to alert a user and/or to the farm control system to activate the climate control system until the temperature stabilizes at a desired temperature within the desired temperature range. The if-then relationships can be stored as program modules in the memory.

Data and processing modules can be packaged into one or more consumable application programming interfaces (APIs), enabling internal and external applications to be built with the farm data. The API provides a versatile interface between the operating system of the user's device and any of a variety of farm-related applications. Example APIs can include recipes, regional yields, pricing, farm production, farm data, farm operations, and maintenance.

In some embodiments, the API can conform to the constraints of representational state transfer (RESTful) architecture. Other API call formats or protocols can be used, such as, without limitation, HTML or XML tags, JavaScript, PHP, Python, Perl, or AJAX.

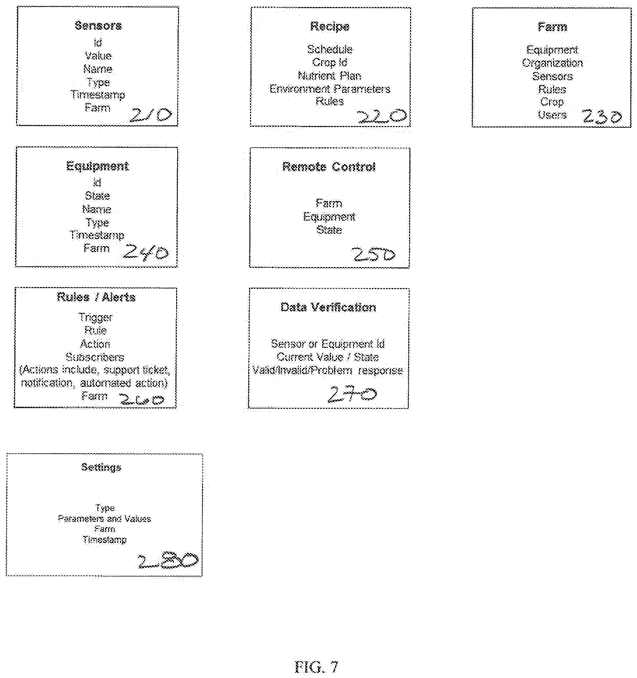

Fig. 7 schematically illustrates various example of modules for monitoring and controlling various components of the farm networking system. For example, a sensors modules 210 can include, for the sensors on each farm, an identification reference ("id") of each sensor, data values, data types, timestamps, and farm identifications. A recipe module 220 can include, for each crop recipe, identification of the crop, a schedule, for example, transplant and harvest timelines, nutrient plans, environmental parameters, and rules, for example, to maintain equipment parameters and optimal climate. A farm module 230 can include, for each farm in the network, the equipment used on that farm, the organization of the farm (for example, where crops are located within the farm, which users have accessed the farm and for what time periods, any workflows performed on the farm), the sensors used on the farm, the rules used for the crops grown on the farm, and the users (the farmers who are authorized to access the farm networking system). An equipment module 240 can include, for the equipment on each farm, an identification reference for each piece of equipment, the state of the piece of equipment at a particular time (such as on or off), name, type, timestamp, and farm identification. A remote control operations module 250 can include, for each farm, an identification of each farm, the equipment to be monitored and controlled remotely on each farm, and the state of the equipment at any particular time. A rules/alerts module 260 can include parameters that trigger operation of a rule, a description of the rule, actions taken, to receive notifications, and farm identifications. Actions can include, for example, issuance of a support ticket, a notification, or an instruction to perform an automated action. A data verification module 270 can include sensor or equipment identification, current value and/or state of each sensor or piece of equipment, an indication of whether a data entry is valid or invalid, and a problem response. A settings module 280 can include the types of settings, parameters and values for each setting, an identification of each farm, and timestamps.

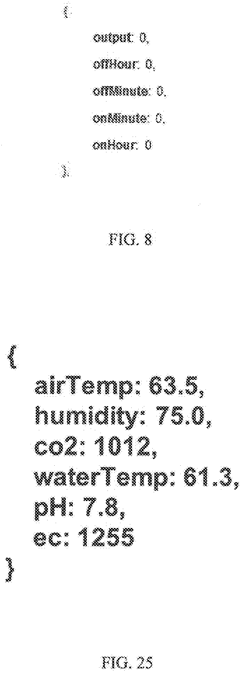

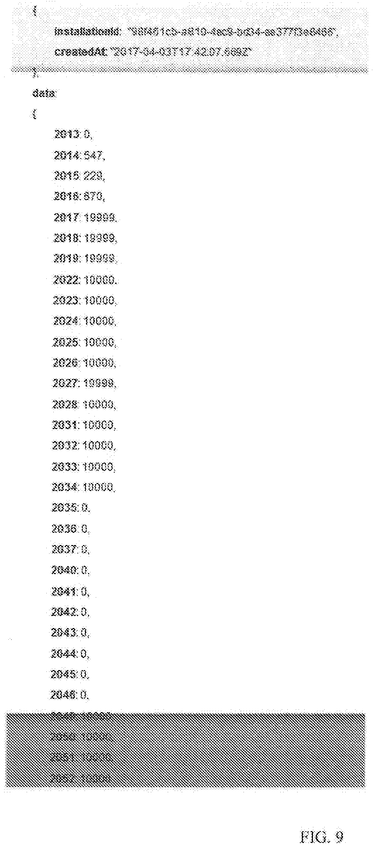

Fig. 8 is an illustration of an embodiment of a data structure that can be used for storing data relating to settings. The data can include an output and timestamps for off and on times. Fig. 9 is an illustration of an embodiment of a data structure that can be used for storing data relating to sensor values. The data can include values at various time intervals, such as every minute. Fig. 25 is an embodiment of a data structure for various parameters that can be used in an application programming interface.

Additional example applications can include applications to provide connections between the farm and remote devices and servers, a farm shop for purchasing items, a crop tracker, a return on investment (ROI) view, market and community supported agriculture (CSA) tools, fleet management, proactive support, and operation planners and schedulers.

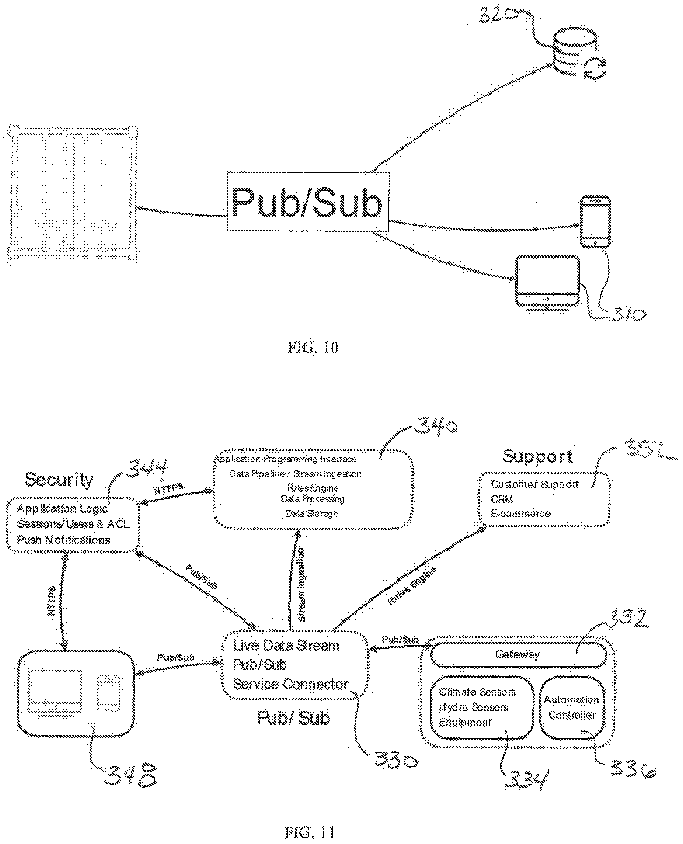

In some embodiments, communications can be sent automatically to a farm using a push messaging system. In some embodiments, communications can be sent using a publish-subscribe architecture in which communications are sent to those farms that have subscribed to receive certain topics or types of information. Referring to Fig. 10, communications can be sent to the various devices 310 of each subscribed user and to data storage devices 320, which can be updated upon receiving a communication. Users can select which notifications they wish to receive. For example, users who grow basil may select to receive notifications relating to basil, so that they can receive updates and notifications regarding the basil recipe, which can include information about, for example, the basil growth cycle and environment. Auto control can enable a farm to take action on these notifications to optimize the environment for the basil based on the current growth period and any new information added to the recipe.

Referring to Fig. 11, in some embodiments, a farm networking service can include publish-subscribe architecture including a communication module or hub 330 to coordinate live data streams and function as a service connector as well as provide communications to farm network members. A farm networking service can provide a gateway 332, in communication with the hub, for transmitting communications regarding equipment and as, without limitation, climate and hydro sensors, and an automation controller 336 for coordinating the automation of various tasks. The farm networking service can include an application programming interface 340 for coordinating a data pipeline or stream ingestion for data streaming, rules engine(s) used in data processing, and data storage. A farm networking service can include a security module 344 to handle application logic, track sessions and users, maintain an access control list (ACL), and coordinate push notifications to farms 348 over a secure channel or network, for example using the HTTPS protocol. A farm networking service can include a support module 352 for providing customer support, customer relations management applications, and e-commerce capabilities.

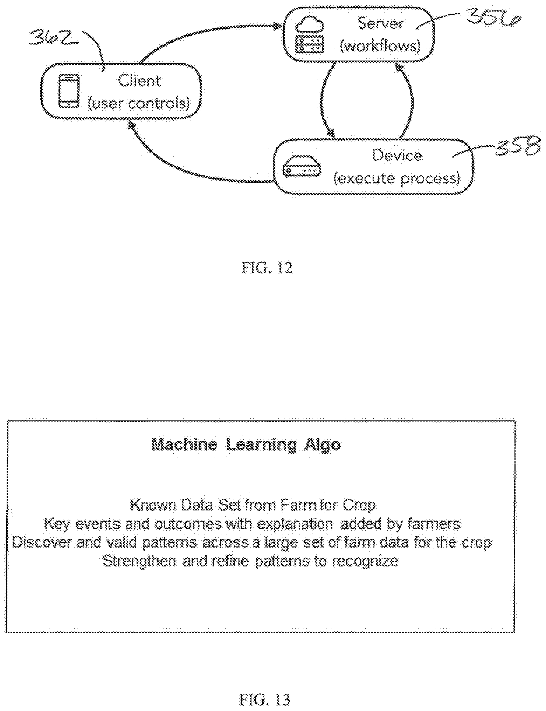

Referring to Fig. 12, in some embodiments, a farm networking service can utilize a three-party architecture for coordinating communications and execution of processes in situations in which a traditional request/response protocol does not provide sufficient capabilities. For example, in some situations, a process could take too long for an HTTP protocol and might time out. As a further example, a disconnect of a client device can occur for various reasons, which could be problematic during an important or time-critical process. In some embodiments, a farm networking service can include a server 356 or other processing device for coordinating workflows. Workflows can include any task or action needed to be performed at a farm, from simple tasks such as turning on lights, to more complex processes, such as calibrating sensors. The server can provide a capability for error handling and workflow logic, which shifts these capabilities off a client device 362. The server can be in communication with a further processing device 358 for executing the processes. This can enable continuous updates to the workflows and the addition of new workflows without the need for the client to provide the these functionalities or for client intervention.

At a network level, the farm network service can employ pattern processing using the aggregated data from multiple farms across the network. Pattern processing can include, for example and without limitation, patterns relevant to crops and operations, such as crop optimization, equipment optimization, maintenance predictions, workflow optimization, and predicted yields and the like. Pattern processing can include patterns relevant to local and/or regional market data, such as crop yields, pricing, and demand. For example, referring to Fig. 13, a machine learning algorithm can include a data set obtained from farms for a particular crop. Key events and outcomes can be added as available, automatically or by a user, with explanations, can be added by the farmers. The algorithm can discover and validate patterns across a large set of farm data for the crop and can strengthen and refine the patterns over ing techniques can include supervised and unsupervised learning.

More particularly, the farm network service can employ one or more learning algorithms. For each farm in the network, the farm is continually monitored (on a periodic schedule, as noted above). At the network level, parameters can be analyzed and compared. Across an entire network, data relevant to the climate, equipment, and crop yield is collected and analyzed for current best growing parameters and settings. New information is saved. Updates of existing recipes for a particular crop based on the new, learned information can be saved and updates sent to farms on the network.

Monitoring of various farm processes can be used to proactively predict and address issues and problems before they arise or before they lead to more serious disruption. The probability and types of issues can be determined as they evolve based on continuous data generated across the farm network. Similarly, maintenance schedules can be based on network learning from data generated across the farm network. For example, if data indicates a pattern in the timing of maintenance for a particular piece of equipment, a notification can be sent to users at farms with that equipment with a notification of the anticipated maintenance time. As another example based on learning across the network, user generated content and market data can provide farmers and farm operators with optimal crops to grow based on market demands.

Regional crop supply predictions can be made based on the data gathered across the network. For example, using farm climate and equipment data for a particular crop, the final crop yield can be predicted based on a highest possible harvest. For example, data may show that the crop experienced a temperature swing of a certain amount. Based on learning from previous data, the predicted crop yield can be reduced due to this temperature swing. This data can be used to determine an amount of a specific crop that will enter the market in coming weeks. As a farm's output is tracked, a supply calendar can be generated to further predict the outcome of planned crops beyond the current harvest.

A recipe for a crop can include optimal climate, equipment parameters, and yield throughout a plant's growth lifecycle, as well as optimal transplant and harvest timelines. The farmer sets up the farm for growing a crop. Settings are transmitted to the farm networking service and saved. Using the farm network learning, the optimal conditions are determined. For example, from the aggregated data, a pattern may emerge that a particular crop has a higher yield at a particular temperature range, or if a particular amount of a certain nutrient is used. Recipes can be updated based on such recognized patterns. Any changes can be sent back to the farm.

An automated buy/sell marketplace can be offered based on supply predictions and user generated and market pricing data. For example, a buyer can place a bid on a particular crop, and a farmer can enter a sell price, recommended by the system. The buyer can accept the price, and can sell current and upcoming crops. This transaction can become part of the database of regional market pricing information.

A return on investment (ROI) of a farm can be predicted based on all the inputs (costs) and outputs (revenue) for the farm in real time.

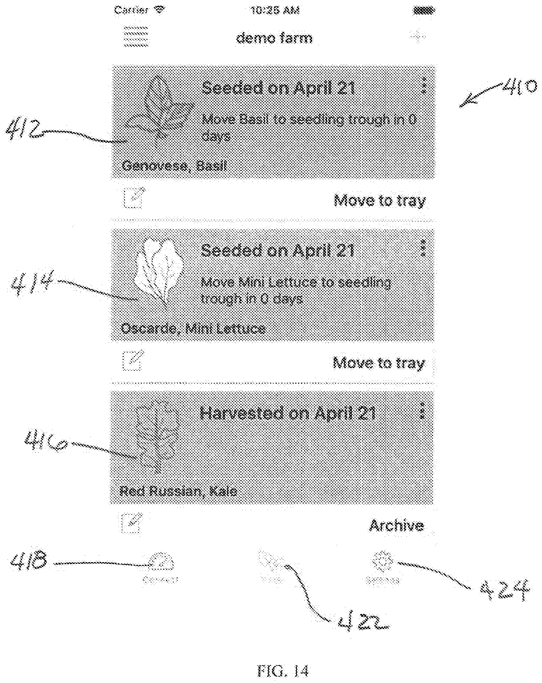

Figs. 14-23 illustrate embodiments of user interface screens viewable on user devices, which can include, without limitation, a laptop or desktop computer or a mobile device such as a smartphone. User interfaces can be optimized for particular user devices, such as a laptop or a smartphone.

Fig. 14 illustrates an embodiment of a user interface for tracking crops 410, optimized for a mobile device. For example, the interface illustrates that basil 412 and lettuce 414 were moved to seedling troughs and kale 416 was harvested. The user can select various options by tapping an appropriate icon, such as connect 418 (to connect to a network), track 422 (to track one or more corps), or settings 424 (to view and change settings).

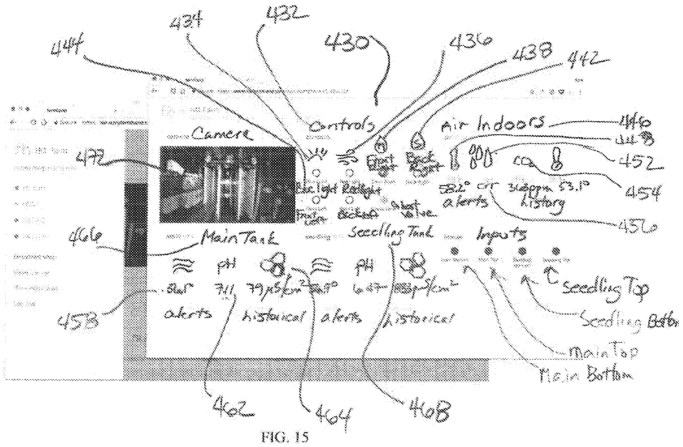

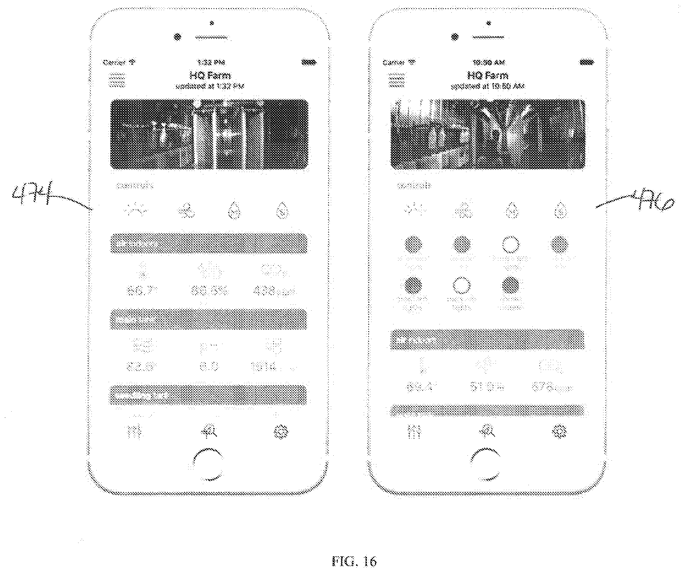

Figs. 15 and 16 illustrate embodiments of a user interface for real-time monitoring of sensors, outputs, and inputs. For example, Fig. 15 illustrates a screen 430 in which a user can select Controls 432, with aspects to monitor and control, such as lighting 434, ventilation 436, a main growing chamber 438 (indicated by M), or a seedling chamber 442 (indicated by S). In the embodiment shown, lighting has been selected and various lighting options 444 are presented for selection (Blue Light, Red Light, Front Right, Back Right, Front Left, Back Left, Ghost Valve). A user can select air indoors 446 to monitor or control indoor air parameters such as temperature 448 at one or more locations, humidity 452, and CO₂ level 454. In the embodiment illustrated, an error condition 456 on the humidity level is indicated by the notation "err," for example, to prompt a user investigation. Historical levels can be viewed and monitored and alerts can be viewed. A user can monitor and control parameters such as temperature 458, pH level 462, and electrolyte conductivity 464 in a main nutrient tank 466 or a seedling nutrient tank 468. A view of a feed from a camera 472 in the farm can be provided. Fig. 16 illustrates similar screens 474, 476 optimized for a mobile device. A user can scroll the screen to bring the various options into view and tap to select the desired option.

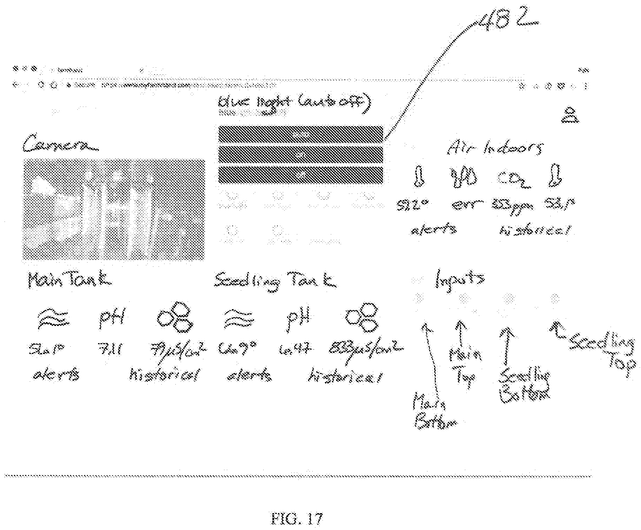

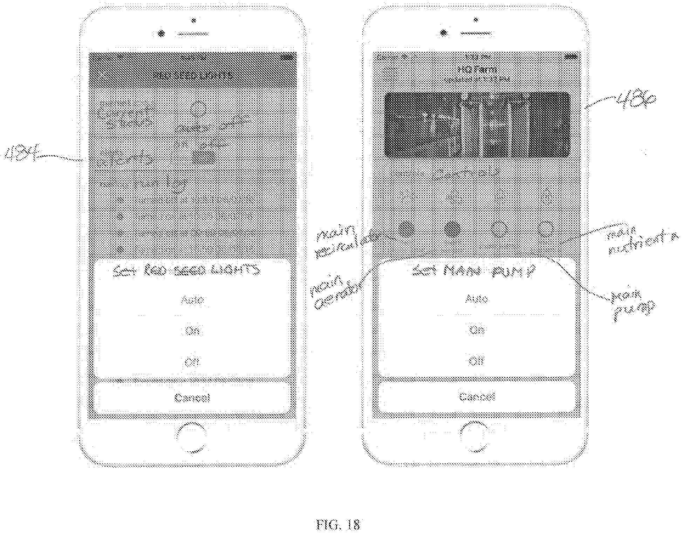

Figs. 17 and 18 illustrate embodiments of a user interface 480 for controlling farm mple, if the "blue light" in Fig. 15 is selected, a screen 482, illustrated in Fig. 17, appears allowing the user to set the blue light to "on," "off," or "auto." Fig. 18 illustrates analogous screens 484, 486 optimized for a mobile device, indicating control of red seed lights and a main pump.

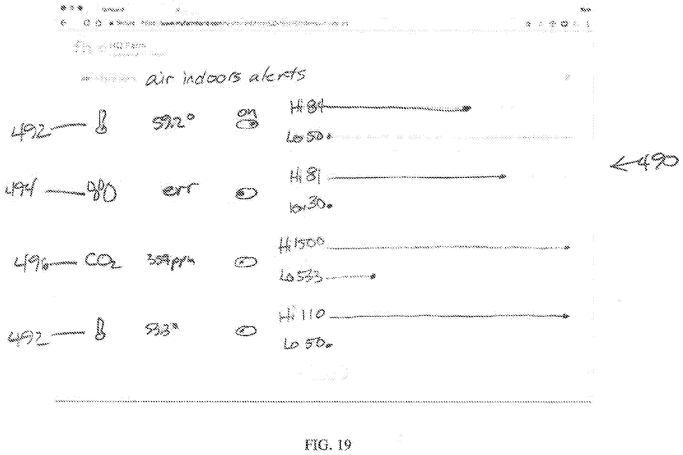

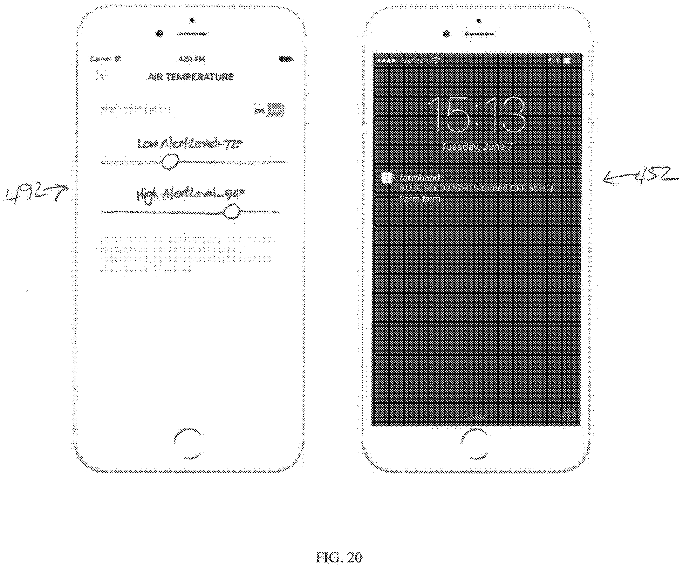

Figs. 19 and 20 illustrate embodiments of a user interface for receiving alerts for controller events, such as outputs that have turned on or off, sensors that are outside of a set range, and the like. For example, Fig. 19 illustrates a screen 490 showing alerts for air temperature 492, humidity 494, CO₂ level 496. An error condition is present for the humidity level, indicated by the notation "err." The user can change the settings if desired by changing the indicator bars. Fig. 20 illustrates analogous screens 498, 502 optimized for a mobile device, indicating air temperature low alert level and high alert level, and blue seed light status.

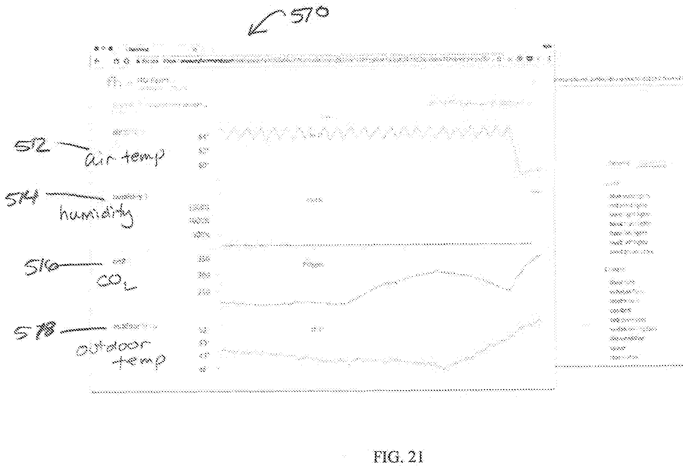

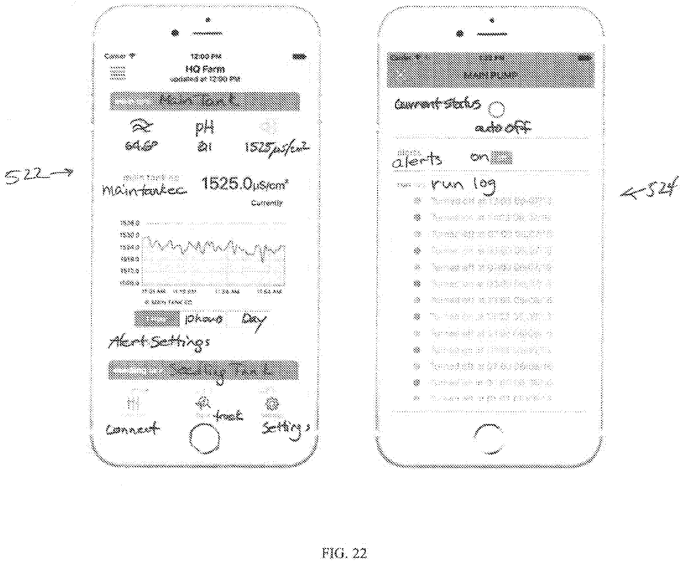

Figs. 21 and 22 illustrate embodiments of a user interface for viewing historic sensor readings and run logs for various sensors and equipment for any time period. For example. Fig. 21 illustrates a screen 510 with sensor data for air temperature 512, humidity level 514, CO₂ level 516, and outdoor temperature 518. Fig. 22 illustrates analogous screens for a mobile device, showing electrolyte conductivity for a main tank, and current status, alerts setting, and a run log for a main pump.

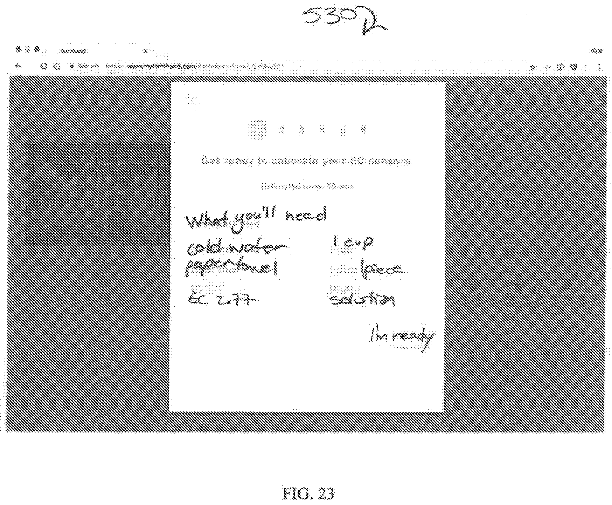

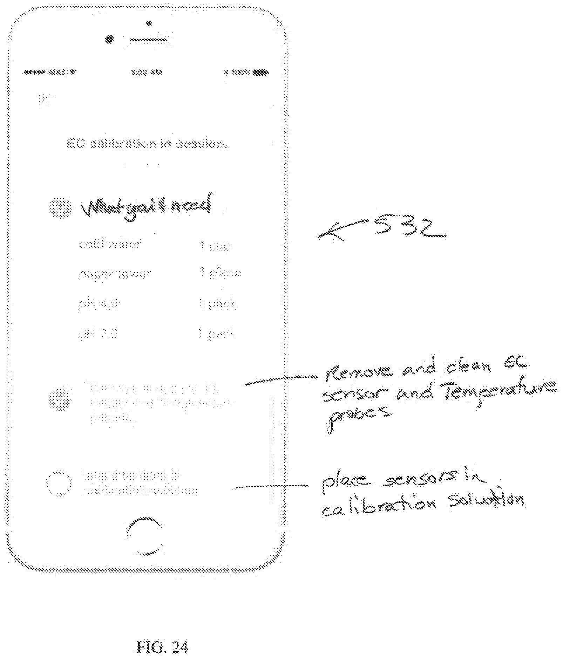

Figs. 23 and 24 illustrate embodiments of a user interface to guide a user through the steps of performing a calibration or other process. For example, Fig. 23 illustrates a screen 530 showing a first step in a calibration process for an electrolyte conductivity sensor. Fig. 24 illustrates an analogous screen 532 for a mobile device, indicating an electrolyte conductivity calibration in process and showing that a user has completed and checked off the first two steps in the process. Additional screens can be provided to guide users through processes for routine maintenance and cleaning.

The system can be implemented as software- and hardware-based tools for controlling and monitoring modular farms as described herein. For example, the farm control system and the farm networking service can be implemented as or can include one or more computing devices that include a combination of hardware, software, and firmware that allows the computing device to run an applications layer or otherwise perform various processing tasks. Computing devices can include without limitation personal computers, work stations, servers, laptop computers, tablet computers, mobile devices, hand-held devices, wireless devices, smartphones, wearable devices, embedded devices, microprocessor-based devices, microcontroller-based devices, programmable consumer electronics, mini-computers, main id the like.

The computing device can include a basic input/output system (BIOS) and an operating system as software to manage hardware components, coordinate the interface between hardware and software, and manage basic operations such as start up. The computing device can include one or more processors and memory that cooperate with the operating system to provide basic functionality for the computing device. The operating system provides support functionality for the applications layer and other processing tasks. The computing device can include a system bus or other bus (such as memory bus, local bus, peripheral bus, and the like) for providing communication between the various hardware, software, and firmware components and with any external devices. Any type of architecture or infrastructure that allows the components to communicate and interact with each other can be used.

Processing tasks can be carried out by one or more processors. Various types of processing technology can be used, including a single processor or multiple processors, a central processing unit (CPU), multicore processors, parallel processors, or distributed processors. Additional specialized processing resources such as graphics (e.g., a graphics processing unit or GPU), video, multimedia, or mathematical processing capabilities can be provided to perform certain processing tasks. Various learning algorithms can be implemented. Processing tasks can be implemented with computer-executable instructions, such as application programs or other program modules, executed by the computing device. Application programs and program modules can include routines, subroutines, programs, drivers, objects, components, data structures, and the like that perform particular tasks or operate on data.

Processors can include one or more logic devices, such as small-scale integrated circuits, programmable logic arrays, programmable logic device, masked-programmed gate arrays, field programmable gate arrays (FPGAs), and application specific integrated circuits (ASICs). Logic devices can include, without limitation, arithmetic logic blocks and operators, registers, finite state machines, multiplexers, accumulators, comparators, counters, look-up tables, gates, latches, flip-flops, input and output ports, carry in and carry out ports, and parity generators, and interconnection resources for logic blocks, logic units and logic cells.

The computing device includes memory or storage, which can be accessed by the system bus or in any other manner. Memory can store control logic, instructions, and/or data. Memory can include transitory memory, such as cache memory, random access memory (RAM), static random access memory (SRAM), main memory, dynamic random access ind memristor memory cells. Memory can include storage for firmware or microcode, such as programmable read only memory (PROM) and erasable programmable read only memory (EPROM). Memory can include non-transitory or nonvolatile or persistent memory such as read only memory (ROM), hard disk drives, optical storage devices, compact disc drives, flash drives, floppy disk drives, magnetic tape drives, memory chips, and memristor memory cells. Non-transitory memory can be provided on a removable storage device. A computer-readable medium can include any physical medium that is capable of encoding instructions and/or storing data that can be subsequently used by a processor to implement embodiments of the method and system described herein. Physical media can include floppy discs, optical discs, CDs, mini-CDs, DVDs, HD-DVDs, Blu-ray discs, hard drives, tape drives, flash memory, or memory chips. Any other type of tangible, non-transitory storage that can provide instructions and/or data to a processor can be used in these embodiments.

The computing device can include one or more input/output interfaces for connecting input and output devices to various other components of the computing device. Input and output devices can include, without limitation, keyboards, mice, joysticks, microphones, displays, touchscreens, monitors, scanners, speakers, and printers. Interfaces can include universal serial bus (USB) ports, serial ports, parallel ports, game ports, and the like.

The computing device can access a network over a network connection that provides the computing device with telecommunications capabilities. Network connection enables the computing device to communicate and interact with any combination of remote devices, remote networks, and remote entities via a communications link. The communications link can be any type of communication link, including without limitation a wired or wireless link. For example, the network connection can allow the computing device to communicate with remote devices over a network, which can be a wired and/or a wireless network, and which can include any combination of intranet, local area networks (LANs), enterprise-wide networks, medium area networks, wide area networks (WANs), the Internet, cellular networks, and the like. Control logic and/or data can be transmitted to and from the computing device via the network connection. The network connection can include a modem, a network interface (such as an Ethernet card), a communication port, a PCMCIA slot and card, or the like to enable transmission of and receipt of data via the communications link.

The computing device can include a browser and a display that allow a user to browse and view pages or other content served by a web server over the communications link. A web server, server, and database can be located at the same or at different locations and can be computing device, different computing devices, or distributed across a network. A data center can be located at a remote location and accessed by the computing device over a network.

The computer system can include architecture distributed over one or more networks, such as, for example, a cloud computing architecture. Cloud computing includes without limitation distributed network architectures for providing, for example, software as a service (SaaS), infrastructure as a service (IaaS), platform as a service (PaaS), network as a service (NaaS), data as a service (DaaS), database as a service (DBaaS), desktop as a service (DaaS), backend as a service (BaaS), test environment as a service (TEaaS), API as a service (APIaaS), and integration platform as a service (IPaaS).

As used herein, "consisting essentially of" allows the inclusion of materials or steps that do not materially affect the basic and novel characteristics of the claim. Any recitation herein of the term "comprising," particularly in a description of components of a composition or in a description of elements of a device, can be exchanged with "consisting essentially of" or "consisting of."

It will be appreciated that the various features of the embodiments described herein can be combined in a variety of ways. For example, a feature described in conjunction with one embodiment may be included in another embodiment even if not explicitly described in conjunction with that embodiment.

## Claims

1. A system for controlling a network of farms comprising: one or more processors and memory, and machine-readable instructions stored in the memory that, upon execution by the one or more processors cause the system to carry out operations comprising:
receiving communications from a plurality of remotely located modular farms (10), the plurality of remotely located modular farms (10) being modular containers that form contained environments (12) for growing crops, the communications including at least sensor data from one or more of a sensor or an equipment within a contained environment (12) of a modular farm (10) of the plurality of remotely located modular farms (10) and location data including a location of the modular farm (10);
determining instructions regarding growing conditions for growing one or more of the crops within the contained environment based on the sensor data and the location data; and
transmitting a communication to the modular farm (10) comprising the instructions regarding growing conditions.

2. The system of claim 1, wherein the received communications further include one or more of data relating to crop yield, climate within the contained environment, farm equipment, and farm operations.

3. The system of claim 2, wherein the crop yield data includes an amount of a crop harvested over a time period.

4. The system of claim 2, wherein the climate data includes one or more of humidity, CO₂ level, temperature, light level, air flow across a crop, water levels supplied to a crop, nutrient levels supplied to a crop, and nutrient solution parameters, sensed over time within the contained environment.

5. The system of claim 2, wherein the farm equipment data includes one or more of a duty cycle, nutrient solution reservoir level, nutrient supply reservoir level, fuel tank level, equipment failure notification, and maintenance action notification sensed over time.

6. The system of claim 2, wherein the farm operations data includes amounts of resources consumed over a time period, the resources including one or more of fuel, electricity, water, and nutrients.

7. The system of claim 1, further comprising one or more modules operative to monitor and control components of each modular farm, the components including one or more of a sensor, equipment, crop recipe, farm organization, user authentication, rule, alert, data verification and settings.

8. The system of claim 1, further comprising aggregating data from multiple modular farms, the aggregated data including data relating to one or more of a crop yield, crop sale pricing, climate data, equipment data, and farm operations data.

9. The system of claim 8, further comprising determining from the aggregated data, one or more of crop recipe optimization for a particular crop, an equipment maintenance prediction, a predicted yield for a particular crop, local or regional crop yields, crop pricing, and crop demand.

10. The system of claim 1, wherein the transmitted communication includes instructions to carry out operations comprising controlling and monitoring one or more of a lighting system, an irrigation system, a climate control system, and a ventilation system within the contained environment.

11. The system of claim 1, wherein the transmitted communication includes a notification to users associated with the modular farm (10), and wherein the notifications are pushed to user devices that are subscribed to receive the notifications.

12. The system of claim 1, wherein the transmitted communication includes instructions for executing farm operation tasks.

13. A method for controlling a network of farms, comprising:
receiving, at one or more processors, communications from a plurality of remotely located modular farms (10), the plurality of remotely located modular farms (10) being modular containers that form contained environments (12) for growing crops, the communications including at least sensor data from one or more of a sensor or an equipment within a contained environment (12) of a modular farm (10) of the plurality of remotely located modular farms (10) and location data including a location of the modular farm (10);
determining instructions regarding growing conditions for growing one or more of the crops within the contained environment based on the sensor data and the location data; and
transmitting, by the one or more processors, a communication to the modular farm (10) comprising the instructions regarding growing conditions.

14. A system for monitoring and controlling a plurality of remotely located modular farms (10) over a network, comprising:
one or more processors and memory, and machine-readable instructions stored in the memory that, upon execution by the one or more processors cause the system to carry out operations comprising:
transmitting communications from at least one modular farm (10) of the plurality of remotely located modular farms (10) to a remote computing system, the at least one modular farm (10) being a modular container that form a contained environment for growing a crop, the communications including at least sensor data from one or more of a sensor or an equipment within the contained environment (12) and location data including a location of the at least one modular farm (10);
receiving a communication from the remote computing system comprising instructions regarding growing conditions for growing the crop within the contained environment, based on the sensor data and the location data; and
operating the equipment in response to the instructions.

15. The system of claim 14, wherein the transmitted data includes data relating to one or more of a crop yield, climate within the contained environment, farm equipment, and farm operations.

16. The system of claim 14, wherein the transmitted data includes user generated data comprising one or more of pricing data, operational data, location data, purchases, and support data.

17. The system of claim 14, further comprising, at the at least one modular farm (10), a communication gateway device to enable communication between the at least one modular farm (10) and the remote computing system, and with one or more user devices associated with the at least one modular farm (10).

18. The system of claim 17, wherein:
the one or more user device include one or more of a personal computer, laptop computer, tablet computer, mobile device, smart phone, smart watch, or wearable device; or
the communication gateway device is operative to transmit and receive communications over a wired network or a wireless network.

19. The system of claim 14, wherein the contained environment (12) of the at least one modular farm (10) comprises a container housing racks for growing plants, a lighting system configured to provide light for the plants, an irrigation system configured to provide nutrients to the plants, a climate control system configured to control environmental condition within the container, and a ventilation system configured to provide airflow to the plants.

20. The system of claim 19, further comprising machine-readable instructions stored in the memory that, upon execution by the one or more processors, cause the system to carry out operations comprising controlling and monitoring one or more of the lighting system, the irrigation system, the climate control system, and the ventilation system.

21. A method for monitoring and controlling a plurality of remotely located modular farms (10) over a network, comprising:
transmitting, by one or more processors, communications from at least one modular farm (10) of the plurality of remotely located modular farms (10) to a remote computing system, the at least one modular farm (10) comprising a contained environment (12) for growing a crop, the communications including at least sensor data from one or more of a sensor or an equipment within the contained environment (12) and location data including a location of the at least one modular farm (10);
receiving, by the one or more processors, a communication from the remote computing system comprising instructions regarding growing conditions for growing the crop within the contained environment based on the sensor data and the location data; and
operating the equipment in response to the instructions.

22. A system of controlling a modular container farm, comprising:
one or more processors and memory, associated with the modular container farm (10) that form a contained environment (12) for growing a crop, and machine-readable instructions stored in the memory that, upon execution by the one or more processors cause the system to carry out operations for controlling and monitoring farm operations of the modular container farm (10), based on data including location data including a location of the modular container farm (10), and
a user device in communication with the one or more processors,
wherein the operations comprise displaying on the user device a plurality of farm control operations comprising one or more of lighting control, ventilation control, growing chamber parameters, and seedling chamber parameters based on the data.

23. The system of claim 22, further comprising displaying on the user device a camera feed from an interior of the modular container farm (10).

24. The system of claim 22, further comprising providing one or more of a historical log, a run log, and alert notifications.

25. The system of claim 22, wherein the growing chamber parameters or the seedling chamber parameters include one or more of air temperature, humidity, CO₂ level, nutrient tank temperature, nutrient tank pH level, and nutrient tank electrolyte conductivity.

26. A method of controlling a modular container farm (10), comprising:
transmitting to a user device associated with the modular container farm (10) a display comprising a plurality of farm control operations based on data including location data including a location of the modular container farm (10), the plurality of farm control operations comprising one or more of lighting control, ventilation control, growing chamber parameters, and seedling chamber parameters based on the data.

## Patentansprüche

1. System zum Steuern eines Netzes von Farmen, umfassend
einen oder mehrere Prozessoren und einen Speicher sowie im Speicher gespeicherte maschinenlesbare Anweisungen, die bei Ausführung durch den einen oder die mehreren Prozessoren das System veranlassen, Operationen durchzuführen, die umfassen:
Empfangen von Mitteilungen von einer Vielzahl von entfernt angeordneten modularen Farmen (10), wobei die Vielzahl von entfernt angeordneten modularen Farmen (10) modulare Behälter sind, die geschlossene Umgebungen (12) für den Anbau von Kulturpflanzen bilden, wobei die Mitteilungen mindestens Sensordaten von einem oder mehreren von einem Sensor und einer Ausrüstung innerhalb einer geschlossenen Umgebung (12) einer modularen Farm (10) der Vielzahl von entfernt angeordneten modularen Farmen (10) und Standortdaten einschließlich eines Standorts der modularen Farm (10) enthalten,
Bestimmen von Anweisungen bezüglich der Anbaubedingungen für den Anbau einer oder mehrerer der Kulturpflanzen innerhalb der geschlossenen Umgebung auf der Grundlage der Sensordaten und der Standortdaten, und
Übermitteln einer Mitteilung an die modulare Farm (10), die die Anweisungen bezüglich der Anbaubedingungen enthält.

2. System nach Anspruch 1, wobei die empfangenen Mitteilungen außerdem eines oder mehrere von Daten enthalten, die sich auf den Ernteertrag, das Klima in der geschlossenen Umgebung, die Ausrüstung der Farm und den Betrieb der Farm beziehen.

3. System nach Anspruch 2, wobei die Ernteertragsdaten die Menge einer über einen bestimmten Zeitraum geernteten Kulturpflanze umfassen.

4. System nach Anspruch 2, wobei die Klimadaten eines oder mehrere umfassen von: Luftfeuchtigkeit, CO₂-Gehalt, Temperatur, Lichtstärke, Luftströmung über eine Kulturpflanze, Wassermengen, die einer Kulturpflanze zugeführt werden, Nährstoffmengen, die einer Kulturpflanze zugeführt werden, und Nährlösungsparametern, die im Laufe der Zeit in der geschlossenen Umgebung erfasst werden.

5. System nach Anspruch 2, wobei die Daten der Ausrüstung der Farm eines oder mehrere umfassen von: Arbeitszyklus, Füllstand eines Nährlösungsvorratsbehälters, Füllstand eines Nährstoffvorratsbehälters, Füllstand eines Kraftstofftanks, Meldung von Ausfällen der Ausrüstung und Meldung von Wartungsmaßnahmen, die im Laufe der Zeit erfasst werden.

6. System nach Anspruch 2, wobei die Farmbetriebsdaten die Menge der über einen bestimmten Zeitraum verbrauchten Ressourcen umfassen, wobei die Ressourcen eines oder mehrere von Kraftstoff, Elektrizität, Wasser und Nährstoffen umfassen.

7. System nach Anspruch 1, ferner umfassend ein oder mehrere Module zur Überwachung und Steuerung von Komponenten jeder modularen Farm, wobei die Komponenten eines oder mehrere umfassen von einem Sensor, Ausrüstung, Kulturpflanzenrezeptur, Organisation der Farm, Benutzerauthentifizierung, Regeln, Warnungen, Datenüberprüfung und Einstellungen.

8. System nach Anspruch 1, ferner umfassend das Aggregieren von Daten aus mehreren modularen Farmen, wobei die aggregierten Daten Daten enthalten, die sich auf eines oder mehrere beziehen von Ernteerträgen, Preise für den Verkauf von Erntegut, Klimadaten, Ausrüstungsdaten und Daten des Betriebs der Farm.

9. System nach Anspruch 8, ferner umfassend Bestimmen, aus den gesammelten Daten, eines oder mehrerer von Optimierung der Kulturpflanzenrezeptur für eine bestimmte Kulturpflanze, Vorhersage der Wartung der Ausrüstung, vorhergesagter Ertrag für eine bestimmte Kulturpflanze, lokale oder regionale Ernteerträge, Preise für die Kulturpflanze und Nachfrage nach der Kulturpflanze.

10. System nach Anspruch 1, wobei die übertragene Mitteilung Anweisungen zur Durchführung von Operationen enthält, umfassend die Steuerung und Überwachung eines oder mehrerer von einem Beleuchtungssystem, einem Bewässerungssystem, eines Klimasteuersystems und eines Belüftungssystems innerhalb der geschlossenen Umgebung.

11. System nach Anspruch 1, wobei die übertragene Mitteilung eine Benachrichtigung an die mit der modularen Farm (10) verbundenen Benutzer enthält und wobei die Benachrichtigungen an Benutzergeräte gesendet werden, die den Empfang der Benachrichtigungen abonniert haben.

12. System nach Anspruch 1, wobei die übermittelte Mitteilung Anweisungen zur Ausführung von Aufgaben zum Betrieb der Farm enthält.

13. Verfahren zur Steuerung eines Netzes von Farmen, umfassend
Empfangen, an einem oder mehreren Prozessoren, von Mitteilungen von einer Vielzahl von entfernt angeordneten modularen Farmen (10), wobei die Vielzahl von entfernt angeordneten modularen Farmen (10) modulare Behälter sind, die geschlossene Umgebungen (12) für den Anbau von Kulturpflanzen bilden, wobei die Mitteilungen zumindest Sensordaten von einem oder mehreren von einem Sensor und einer Ausrüstung innerhalb einer geschlossenen Umgebung (12) einer modularen Farm (10) der Vielzahl von entfernt angeordneten modularen Farmen (10) und Standortdaten einschließlich eines Standorts der modularen Farm (10) enthalten,
Bestimmen von Anweisungen bezüglich der Anbaubedingungen für den Anbau einer oder mehrerer der Kulturpflanzen innerhalb der geschlossenen Umgebung auf der Grundlage der Sensordaten und der Standortdaten, und
Übermitteln einer Mitteilung an die modulare Farm (10) durch den einen oder die mehreren Prozessoren, die die Anweisungen bezüglich der Anbaubedingungen enthält.

14. System zur Überwachung und Steuerung einer Vielzahl von entfernt angeordneten modularen Farmen (10) über ein Netz, umfassend
einen oder mehrere Prozessoren und einen Speicher sowie im Speicher gespeicherte maschinenlesbare Anweisungen, die bei Ausführung durch den einen oder die mehreren Prozessoren das System veranlassen, Operationen durchzuführen, die umfassen:
Übertragen von Mitteilungen von mindestens einer modularen Farm (10) der Vielzahl von entfernt angeordneten modularen Farmen (10) an ein entferntes Computersystem, wobei die mindestens eine modulare Farm (10) ein modularer Behälter ist, der eine geschlossene Umgebung für den Anbau einer Kulturpflanze bildet, wobei die Mitteilungen mindestens Sensordaten von einem oder mehreren von einem Sensor und einer Ausrüstung innerhalb der geschlossenen Umgebung (12) und Standortdaten einschließlich eines Standorts der mindestens einen modularen Farm (10) enthalten,
Empfangen einer Mitteilung von dem entfernten Computersystem, die basierend auf den Sensordaten und den Standortdaten Anweisungen bezüglich der Anbaubedingungen für den Anbau der Kulturpflanze innerhalb der geschlossenen Umgebung enthält, und
Bedienen der Ausrüstung entsprechend den Anweisungen.

15. System nach Anspruch 14, wobei die übermittelten Daten Daten enthalten, die sich auf eines oder mehrere von Ernteertrag, Klima in der geschlossenen Umgebung, Ausrüstung der Farm und den Betrieb der Farm beziehen.

16. System nach Anspruch 14, wobei die übermittelten Daten benutzergenerierte Daten enthalten, die eines oder mehrere umfassen von Preisdaten, Betriebsdaten, Standortdaten, Einkäufen und Unterstützungsdaten.

17. System nach Anspruch 14, ferner umfassend bei der mindestens einen modularen Farm (10) eine Kommunikations-Gateway-Vorrichtung, um die Kommunikation zwischen der mindestens einen modularen Farm (10) und dem entfernten Computersystem sowie mit einem oder mehreren Benutzergeräten, die mit der mindestens einen modularen Farm (10) verbunden sind, zu ermöglichen.

18. System nach Anspruch 17, wobei:
das eine oder die mehreren Benutzergeräte eines oder mehrere umfassen von einem Personal-Computer, einem Laptop-Computer, einem Tablet-Computer, einem mobilen Gerät, einem Smartphone, einer Smartwatch und einem tragbaren Gerät, oder
das Kommunikations-Gateway-Gerät in der Lage ist, Mitteilungen über ein drahtgebundenes Netz oder ein drahtloses Netz zu senden und zu empfangen.

19. System nach Anspruch 14, wobei die geschlossene Umgebung (12) der mindestens einen modularen Farm (10) einen Container, in dem Gestelle zum Anbauen von Kulturpflanzen untergebracht sind, ein Beleuchtungssystem, das dazu konfiguriert ist, die Kulturpflanzen mit Licht zu versorgen, ein Bewässerungssystem, das dazu konfiguriert ist, die Kulturpflanzen mit Nährstoffen zu versorgen, ein Klimasteuersystem, das dazu konfiguriert ist, die Umgebungsbedingungen in dem Container zu steuern, und ein Belüftungssystem, das dazu konfiguriert ist, einen Luftstrom zu den Kulturpflanzen zu liefern, umfasst.

20. System nach Anspruch 19, ferner umfassend in dem Speicher gespeicherte maschinenlesbare Anweisungen, die bei Ausführung durch den einen oder die mehreren Prozessoren das System veranlassen, Operationen auszuführen, die die Steuerung und Überwachung von einem oder mehreren von dem Beleuchtungssystem, dem Bewässerungssystems, dem Klimasteuersystems und dem Belüftungssystems umfassen.

21. Verfahren zur Überwachung und Steuerung einer Vielzahl von entfernt angeordneten modularen Farmen (10) über ein Netz, umfassend
Übertragen, durch einen oder mehrere Prozessoren, von Mitteilungen von mindestens einer modularen Farm (10) der Vielzahl von entfernt angeordneten modularen Farmen (10) zu einem entfernten Computersystem, wobei die mindestens eine modulare Farm (10) eine geschlossene Umgebung (12) für den Anbau einer Kulturpflanze umfasst, wobei die Mitteilungen mindestens Sensordaten von einem oder mehreren von einem Sensor und einer Ausrüstung innerhalb der geschlossenen Umgebung (12) und Standortdaten einschließlich eines Standorts der mindestens einen modularen Farm (10) umfassen,
Empfangen einer Mitteilung von dem entfernten Computersystem durch den einen oder die mehreren Prozessoren, die Anweisungen bezüglich der Anbaubedingungen für den Anbau der Kulturpflanze innerhalb der geschlossenen Umgebung auf der Grundlage der Sensordaten und der Standortdaten enthält, und
Betreiben der Ausrüstung entsprechend den Anweisungen.

22. System zur Steuerung einer modularen Containerfarm, umfassend
einen oder mehrere Prozessoren und einen Speicher, die mit der modularen Containerfarm (10) verbunden sind, die eine geschlossene Umgebung (12) für den Anbau einer Kulturpflanze bilden, und maschinenlesbare Befehle, die in dem Speicher gespeichert sind, die bei Ausführung durch den einen oder die mehreren Prozessoren das System veranlassen, Operationen zur Steuerung und Überwachung des Farmbetriebs der modularen Containerfarm (10) auf der Grundlage von Daten einschließlich Standortdaten einschließlich eines Standorts der modularen Containerfarm (10) durchzuführen, und
ein Benutzergerät, das mit dem einen oder den mehreren Prozessoren kommuniziert,
wobei die Operationen das Anzeigen einer Vielzahl von Farmsteuerungsoperationen auf dem Benutzergerät umfassen, die auf der Grundlage der Daten eine oder mehrere umfassen von Beleuchtungssteuerung, Belüftungssteuerung, Anbaukammerparametern und Sämlingskammerparametern.

23. System nach Anspruch 22, ferner umfassend das Anzeigen eines Kamerabildes aus dem Inneren der modularen Containerfarm (10) auf dem Benutzergerät.

24. System nach Anspruch 22, ferner umfassend das Bereitstellen eines oder mehrerer historischer Protokolle, eines Ablaufprotokolls und von Warnbenachrichtigungen.

25. System nach Anspruch 22, wobei die Anbaukammerparameter oder die Sämlingskammerparameter eines oder mehrere umfassen von Lufttemperatur, Luftfeuchtigkeit, CO₂-Gehalt, Temperatur des Nährstofftanks, pH-Wert des Nährstofftanks und Elektrolytleitfähigkeit des Nährstofftanks.

26. Verfahren zur Steuerung einer modularen Containerfarm (10), umfassend
Übertragen einer Anzeige, die eine Vielzahl von Farmsteuerungsoperationen auf der Grundlage von Daten einschließlich Standortdaten einschließlich eines Standorts der modularen Containerfarm (10) umfasst, an eine mit der modularen Containerfarm (10) verbundene Benutzervorrichtung, wobei die Vielzahl von Farmsteuerungsoperationen auf der Grundlage der Daten eines oder mehrere umfasst von Beleuchtungssteuerung, Belüftungssteuerung, Anbaukammerparametern und Sämlingskammerparametern.

## Revendications

1. Système de commande d'un réseau de fermes comprenant un ou plusieurs processeurs et une mémoire, et des instructions lisibles par machine stockées dans la mémoire qui, lors d'une exécution par les un ou plusieurs processeurs, amènent le système à mettre en œuvre des opérations comprenant :
la réception de communications depuis une pluralité de fermes modulaires (10) situées à distance, la pluralité de fermes modulaires (10) situées à distance étant des conteneurs modulaires qui constituent des environnements confinés (12) pour faire croître des cultures, les communications incluant au moins une donnée de capteur depuis un ou plusieurs parmi un capteur ou un équipement à l'intérieur d'un environnement confiné (12) d'une ferme modulaire (10) de la pluralité de fermes modulaires (10) situées à distance et une donnée d'emplacement incluant un emplacement de la ferme modulaire (10) ;
la détermination d'instructions relatives à des conditions de croissance pour faire croître une ou plusieurs des cultures à l'intérieur de l'environnement confiné sur la base de la donnée de capteur et de la donnée d'emplacement ; et
la transmission d'une communication à la ferme modulaire (10) comprenant les instructions relatives à des conditions de croissance.

2. Système selon la revendication 1, dans lequel les communications reçues incluent en outre une ou plusieurs de données relatives à un rendement de culture, un climat à l'intérieur de l'environnement confiné, un équipement de ferme et des opérations de ferme.

3. Système selon la revendication 2, dans lequel la donnée de rendement de culture inclut une quantité d'une culture récoltée sur une certaine durée.

4. Système selon la revendication 2, dans lequel la donnée de climat inclut un ou plusieurs parmi une humidité, un niveau de CO₂, une température, une intensité lumineuse, un flux d'air à travers une culture, des niveaux d'eau fournis à une culture, des niveaux de nutriments fournis à une culture et des paramètres de solution nutritive, détectés au cours du temps à l'intérieur de l'environnement confiné.

5. Système selon la revendication 2, dans lequel la donnée d'équipement de ferme inclut un ou plusieurs parmi un cycle opératoire, un niveau de réservoir de solution nutritive, un niveau de réservoir de fourniture de nutriments, un niveau de réservoir de carburant, une notification de défaillance d'équipement et une notification d'action de maintenance, détectés au cours du temps.

6. Système selon la revendication 2, dans lequel la donnée d'opérations de ferme inclut des quantités de ressources consommées sur une certaine durée, les ressources incluant un ou plusieurs parmi du carburant, de l'électricité, de l'eau et des nutriments.

7. Système selon la revendication 1, comprenant en outre un ou plusieurs modules opérationnels pour piloter et commander des composantes de chaque ferme modulaire, les composantes incluant un ou plusieurs parmi un capteur, un équipement, une recette de culture, une organisation de ferme, une authentification d'utilisateur, une règle, une alerte, une vérification de donnée et des réglages.

8. Système selon la revendication 1, comprenant en outre l'agrégation de données depuis de multiples fermes modulaires, la donnée agrégée incluant une donnée relative à un ou plusieurs parmi un rendement de culture, un établissement de prix de vente de culture, une donnée de climat, une donnée d'équipement et une donnée d'opérations de ferme.

9. Système selon la revendication 8, comprenant en outre la détermination à partir des données agrégées, d'un ou plusieurs parmi une optimisation de recette de culture pour une culture en particulier, une prévision de maintenance d'équipement, un rendement anticipé pour une culture en particulier, des rendements de culture locaux ou régionaux, un établissement de prix de culture et une demande de culture.

10. Système selon la revendication 1, dans lequel la communication transmise inclut des instructions pour mettre en œuvre des opérations comprenant la commande et le pilotage d'un ou plusieurs parmi un système d'éclairage, un système d'irrigation, un système de commande de climat et un système de ventilation à l'intérieur de l'environnement confiné.

11. Système selon la revendication 1, dans lequel la communication transmise inclut une notification à des utilisateurs associés à la ferme modulaire (10), et dans lequel les notifications sont poussées vers des dispositifs d'utilisateur qui sont inscrits pour recevoir les notifications.

12. Système selon la revendication 1, dans lequel la communication transmise inclut des instructions pour exécuter des tâches opérationnelles de ferme.

13. Procédé de commande d'un réseau de fermes comprenant :
la réception, au niveau d'un ou plusieurs processeurs, de communications depuis une pluralité de fermes modulaires (10) situées à distance, la pluralité de fermes modulaires (10) situées à distance étant des conteneurs modulaires qui constituent des environnements confinés (12) pour faire croître des cultures, les communications incluant au moins une donnée de capteur depuis un ou plusieurs parmi un capteur ou un équipement à l'intérieur d'un environnement confiné (12) d'une ferme modulaire (10) de la pluralité de fermes modulaires (10) situées à distance et une donnée d'emplacement incluant un emplacement de la ferme modulaire (10) ;
la détermination d'instructions relatives à des conditions de croissance pour faire croître une ou plusieurs des cultures à l'intérieur de l'environnement confiné sur la base de la donnée de capteur et de la donnée d'emplacement ; et
la transmission, par les un ou plusieurs processeurs, d'une communication à la ferme modulaire (10) comprenant les instructions relatives à des conditions de croissance.

14. Système de pilotage et de commande d'une pluralité de fermes modulaires (10) situées à distance via un réseau, comprenant
un ou plusieurs processeurs et une mémoire, et des instructions lisibles par machine stockées dans la mémoire qui, lors d'une exécution par les un ou plusieurs processeurs, amènent le système à mettre en œuvre des opérations comprenant :
la transmission de communications depuis au moins une ferme modulaire (10) de la pluralité de fermes modulaires (10) situées à distance à un système informatique à distance, la au moins une ferme modulaire (10) étant un conteneur modulaire qui constitue un environnement confiné pour faire croître une culture, les communications incluant au moins une donnée de capteur depuis un ou plusieurs parmi un capteur ou un équipement à l'intérieur d'un environnement confiné (12) et une donnée d'emplacement incluant un emplacement de la au moins une ferme modulaire (10) ;
la réception d'une communication depuis le système informatique à distance comprenant des instructions relatives à des conditions de croissance pour faire croître la culture à l'intérieur de l'environnement confiné, sur la base de la donnée de capteur et de la donnée d'emplacement ; et
le fonctionnement de l'équipement en réponse aux instructions.

15. Système selon la revendication 14, dans lequel la donnée transmise inclut une donnée relative à un ou plusieurs parmi un rendement de culture, un climat à l'intérieur de l'environnement confiné, un équipement de ferme et des opérations de ferme.

16. Système selon la revendication 14, dans lequel la donnée transmise inclut une donnée produite par un utilisateur comprenant un ou plusieurs parmi une donnée d'établissement de prix, une donnée opérationnelle, une donnée d'emplacement, des achats et une donnée de support.

17. Système selon la revendication 14, comprenant en outre, au niveau de la au moins une ferme modulaire (10), un dispositif de passerelle de communication pour permettre une communication entre la au moins une ferme modulaire (10) et le système informatique à distance, et avec un ou plusieurs dispositifs d'utilisateur associés à la au moins une ferme modulaire (10).

18. Système selon la revendication 17, dans lequel :
les un ou plusieurs dispositifs d'utilisateur incluent un ou plusieurs parmi un ordinateur personnel, un ordinateur portable, un ordinateur tablette, un dispositif mobile, un téléphone intelligent, une montre intelligente ou un dispositif portable ; ou
le dispositif de passerelle de communication est opérationnel pour transmettre et recevoir des communications via un réseau filaire ou un réseau sans fil.

19. Système selon la revendication 14, dans lequel l'environnement confiné (12) de la au moins une ferme modulaire (10) comprend un conteneur logeant des bacs pour faire croître des plantes, un système d'éclairage configuré pour fournir une lumière pour les plantes, un système d'irrigation configuré pour fournir des nutriments aux plantes, un système de commande de climat configuré pour commander une condition environnementale à l'intérieur du conteneur et un système de ventilation configuré pour fournir un flux d'air aux plantes.

20. Système selon la revendication 19, comprenant en outre des instructions lisibles par machine stockées dans la mémoire qui, lors d'une exécution par les un ou plusieurs processeurs, amènent le système à mettre en œuvre des opérations comprenant la commande et le pilotage d'un ou plusieurs parmi le système d'éclairage, le système d'irrigation, le système de commande de climat et le système de ventilation.

21. Procédé de pilotage et de commande d'une pluralité de fermes modulaires (10) situées à distance via un réseau, comprenant :
la transmission, par un ou plusieurs processeurs, de communications depuis au moins une ferme modulaire (10) de la pluralité de fermes modulaires (10) situées à distance à un système informatique à distance, la au moins une ferme modulaire (10) comprenant un environnement confiné (12) pour faire croître une culture, les communications incluant au moins une donnée de capteur depuis un ou plusieurs parmi un capteur ou un équipement à l'intérieur de l'environnement confiné (12) et une donnée d'emplacement incluant un emplacement de la au moins une ferme modulaire (10) ;
la réception, par les un ou plusieurs processeurs, d'une communication depuis le système informatique à distance comprenant des instructions relatives à des conditions de croissance pour faire croître la culture à l'intérieur de l'environnement confiné, sur la base de la donnée de capteur et de la donnée d'emplacement ; et
le fonctionnement de l'équipement en réponse aux instructions.

22. Système de commande d'une ferme de conteneurs modulables, comprenant :
un ou plusieurs processeurs et une mémoire, associés à la ferme de conteneurs modulaires (10) qui constituent un environnement confiné (12) pour faire croître une culture, et des instructions lisibles par machine stockées dans la mémoire qui, lors d'une exécution par les un ou plusieurs processeurs, amènent le système à mettre en œuvre des opérations pour commander et piloter des opérations de ferme de la ferme de conteneurs modulaires (10), sur la base d'une donnée incluant une donnée d'emplacement incluant un emplacement de la ferme de conteneurs modulaires (10), et
un dispositif d'utilisateur en communication avec les un ou plusieurs processeurs,
dans lequel les opérations comprennent l'affichage sur le dispositif d'utilisateur d'une pluralité d'opérations de commande de ferme comprenant un ou plusieurs parmi une commande d'éclairage, une commande de ventilation, des paramètres de chambre de croissance et des paramètres de chambre de semis sur la base de la donnée.

23. Système selon la revendication 22, comprenant en outre l'affichage sur le dispositif d'utilisateur d'un flux de caméra depuis un intérieur de la ferme de conteneurs modulaires (10).

24. Système selon la revendication 22, comprenant en outre la fourniture d'un ou plusieurs parmi un journal historique, un journal d'exécution et des notifications d'alerte.

25. Système selon la revendication 22, dans lequel les paramètres de chambre de croissance ou les paramètres de chambre de semis incluent un ou plusieurs parmi une température de l'air, une humidité, un niveau de CO₂, une température de réservoir de nutriments, un niveau de pH de réservoir de nutriments et une conductivité électrolytique de réservoir de nutriments.

26. Procédé de commande d'une ferme de conteneurs modulaires (10), comprenant
la transmission à un dispositif d'utilisateur associé à la ferme de conteneurs modulaires (10) d'un affichage comprenant une pluralité d'opérations de commande de ferme sur la base d'une donnée incluant un emplacement de la ferme de conteneurs modulaires (10), la pluralité d'opérations de commande de ferme comprenant un ou plusieurs parmi une commande d'éclairage, une commande de ventilation, des paramètres de chambre de croissance et des paramètres de chambre de semis sur la base de la donnée.
